(19) **Europäisches Patentamt**

**European Patent Office**

**Office européen des brevets**

(11) **EP 0 870 543 B1**

(12) **EUROPÄISCHE PATENTSCHRIFT**

(45) Veröffentlichungstag und Bekanntmachung des Hinweises auf die Patenterteilung:
**20.08.2003   Patentblatt 2003/34**

(51) Int Cl.$^7$: **B01J 23/10**, C01F 17/00, B01D 53/94

(21) Anmeldenummer: **98105335.8**

(22) Anmeldetag: **24.03.1998**

(54) **Sauerstoff speicherndes Material mit hoher Temperaturstabilität auf der Basis von Ceroxid sowie Verfahren zu seiner Herstellung**

Oxygen storage material having high temperature stability based on cerium oxide and process for preparing such a material

Matériau à base de cérium pour le stockage de l'oxygène et ayant une grande stabilité thermique; procédé de préparation dudit matériau

(84) Benannte Vertragsstaaten:
**AT BE DE ES FI FR GB IT LU NL PT SE**

(30) Priorität: **09.04.1997  DE 19714707**

(43) Veröffentlichungstag der Anmeldung:
**14.10.1998   Patentblatt 1998/42**

(73) Patentinhaber: **OMG AG & Co. KG**
**63457 Hanau (DE)**

(72) Erfinder:
• **Mussmann, Lothar, Dr.**
 **63067 Offenbach (DE)**
• **van Yperen, Renee, Dr.**
 **3632 XC Loenen a/d Vecht (NL)**

• **Lindner, Dieter, Dr.**
 **63457 Hanau (DE)**
• **Kreuzer, Thomas, Dr.**
 **61184 Karben (DE)**
• **Lox, Egbert, Dr.**
 **63457 Hanau (DE)**

(74) Vertreter: **Stellbrink, Axel et al**
**Vossius & Partner**
**Siebertstrasse 4**
**81675 München (DE)**

(56) Entgegenhaltungen:
**EP-A- 0 337 809       EP-A- 0 444 470**
**EP-A- 0 827 775       WO-A-98/28063**
**WO-A-98/42437       WO-A-98/45027**
**US-A- 5 556 825**

EP 0 870 543 B1

**Beschreibung**

Die Erfindung betrifft ein Sauerstoff speicherndes Material sowie ein Verfahren zu seiner Herstellung für Anwendungen bei der katalytischen Umsetzung von Stoffen, insbesondere bei der Abgasreinigung von Verbrennungskraftmaschinen.

Verbrennungskraftmaschinen emittieren als wesentliche Schadstoffe mit dem Abgas Kohlenmonoxid CO, unverbrannte Kohlenwasserstoffe HC und Stickoxide $NO_x$, die durch moderne Abgasreinigungskatalysatoren zu einem hohen Prozentsatz in die unschädlichen Komponenten Wasser, Kohlendioxid und Stickstoff umgesetzt werden. Die Umsetzung erfolgt im wesentlichen bei stöchiometrischen Bedingungen, das heißt der im Abgas enthaltene Sauerstoff wird mit Hilfe einer sogenannten Lambda-Sonde so eingeregelt, daß die Oxidation von Kohlenmonoxid und Kohlenwasserstoffen sowie die Reduktion der Stickoxide zu Stickstoff nahezu quantitativ erfolgen kann. Die hierfür entwickkelten Katalysatoren werden als Dreiwegkatalysatoren bezeichnet. Sie enthalten als katalytisch aktive Komponenten gewöhnlich ein oder mehrere Metalle der Platingruppe des Periodensystems der Elemente auf hochoberflächigen Trägermaterialien wie γ-Aluminiumoxid mit spezifischen Oberflächen von mehr als 100 m2/g.

Stöchiometrische Bedingungen liegen bei Luftzahlen λ von 1 vor. Bei der Luftzahl λ handelt es sich um das auf stöchiometrische Bedingungen normierte Luft/Kraftstoffverhältnis. Das Luft/Kraftstoffverhältnis gibt an, wieviel Kilogramm Luft für die vollständige Verbrennung von einem Kilogramm Treibstoff benötigt werden. Bei üblichen Ottomotor-Kraftstoffen liegt das stöchiometrische Luft/Kraftstoffverhältnis bei einem Wert von 14,6. Das Motorabgas weist je nach Last und Drehzahl mehr oder weniger starke periodische Schwankungen der Luftzahl um den Wert 1 herum auf. Zur besseren Umsetzung der oxidierbaren Schadstoffkomponenten unter diesen Bedingungen werden Sauerstoff speichernde Komponenten wie zum Beispiel Ceroxid eingesetzt, die Sauerstoff durch Änderung des Oxidationszustandes von $Ce^{3+}$ nach $Ce^{4+}$ binden, wenn er im Überschuß vorhanden ist und ihn für die oxidative Umsetzung durch Übergang von $Ce^{4+}$ nach $Ce^{3+}$ wieder abgeben, wenn der Sauerstoff im Abgas im Unterschuß vorliegt.

Autoabgaskatalysatoren werden mit Abgastemperaturen von bis zu 1100°C belastet. Diese hohen Temperaturen erfordern die Verwendung entsprechend temperaturbeständiger und langzeitstabiler Materialien für die Katalysatoren.

Die EP 0 444 470 B1 beschreibt ein hochoberflächiges Ceroxid welches aus einem innigen Gemisch von Ceroxid mit 5 bis 25 Mol.-%, bezogen auf die Mole Ceroxid, eines Ceroxid-Stabilisators besteht. Als Stabilisatoren werden Lanthan, Neodym und Yttrium genannt. Das Material wird durch Co-Präzipitation aus einer gemeinsamen Lösung eines Ceroxidvorläufers und eines Vorläufers des Ceroxidstabilisators erhalten.

Gemäß der EP 0 715 879 A1 kann die Sauerstoffspeicherfähigkeit von Ceroxid optimal genutzt werden, wenn es in Form von Partikeln mit Durchmessern von 5 bis 100 nm auf einem porösen Trägermaterial wie zum Beispiel Aluminiumoxid abgeschieden wird. Hierzu wird eine Dispersion des pulverförmigen Trägermaterials und eines Ceroxidsols, welches Teilchengrößen in dem angegebenen Bereich aufweist, angefertigt. Mit dieser Dispersion wird ein Wabenkörper beschichtet und anschließend getrocknet und für die Dauer von einer Stunde bei 650°C kalziniert. Ebenso kann ein Ceroxidsol gemeinsam mit einem Zirkonoxidsol verwendet werden. Infolge der Kalzinierung vergrößern sich die Partikelgrößen des Ceroxids auf dem Trägermaterial auf mehr als 35 nm. Werden Ceroxidsol und Zirkonoxidsol gemeinsam verwendet, so bildet sich durch die Kalzinierung der Beschichtung (750°C, 1 h) eine feste Lösung von Ceroxid und Zirkonoxid mit Partikelgrößen von etwa 60 nm.

Die EP 0 337 809 B1 beschreibt eine Katalysatorzusammensetzung, die unter anderem mit Ceroxid stabilisierte Zirkonoxidpartikel enthält. Die Zirkonoxidpartikel werden mit Ceroxid stabilisiert, indem Zirkonoxid mit einer Cersalzlösung getränkt wird. Die daraus erhaltenen, getränkten Teilchen werden getrocknet und kalziniert bis die graphische Darstellung des Röntgenbeugungsspektrums keinen Peak der kristallinen Form des Ceroxids mehr zeigt. Das Ceroxid liegt in der Ceroxid/Zirkonoxid-Mischung in einer Menge von 10 bis 50 Gew.-% bezogen auf das Zirkonoxid vor. Zusätzlich zum Cersalz kann auch ein Yttrium- und/oder Kalziumsalz eingesetzt werden. Das Material zeigt nach einer 10-stündigen Kalzinierung in Luft bei einer Temperatur von 900°C im Röntgenbeugungsspektrum nur einen Peak des tetragonalen Zirkonoxids und keinen Peak des Ceroxids. Ceroxid liegt also bei diesem Material im wesentlichen in Form einer festen Lösung mit dem Zirkonoxid vor.

Die aus dem Stand der Technik bekannten Verfahren zur Herstellung eines Sauerstoff speichernden Materials verwenden also Co-Präzipitationsverfahren und Imprägnierverfahren, um Ceroxid durch Zusatz von anderen Komponenten zu stabilisieren oder um Ceroxid auf Trägermaterialien abzuscheiden. Alternativ wird Ceroxid unter Verwendung eines Ceroxidsols direkt in Teilchenform auf den Trägermaterialien abgeschieden.

Nachteilig bei dem Co-Präzipitationsverfahren ist die Tatsache, daß das erhaltene Material zu einem hohen Prozentsatz aus Ceroxid besteht, welches nicht voll für die Aufgabe der Sauerstoffspeicherung genutzt werden kann, da die Sauerstoffspeicherung im wesentlichen an der Oberfläche stattfindet und somit die tieferliegenden Bereiche des Materials nicht für die Speicherung zur Verfügung stehen.

Bei den bekannten Imprägnierverfahren, bzw. bei der Abscheidung von Solen, kommt es beim Entwässern des behandelten Materials zu chromatografischen Effekten, die zu einer ungleichmäßigen Verteilung des Ceroxids auf dem Trägermaterial führen. Wie sich gezeigt hat, führt auch die Porenvolumenimprägnierung, die chromatografische Effekte dadurch vermeidet, daß nur ein Lösungsmittelvolumen entsprechend der Wasseraufnahmekapazität des Trägermaterials verwendet wird, nicht zu befriedigenden Ergebnissen. Zudem ist bei diesem Verfahren das Lösungsmittelvolumen durch die Wasseraufnahmekapazität begrenzt, so daß darin nicht beliebige Mengen von Cersalzen gelöst werden können.

Die US 5,556,825 beschreibt die Herstellung eines Sauerstoff speichernden Materials mit verbesserter Speicherfähigkeit für Sauerstoff und verbesserter Metalldispersion. Als Sauerstoff speichernde Verbindung wird Ceroxid oder eine Mischung aus Ceroxid und Praseodymoxid verwendet. Als Trägermaterial für diese Verbindungen dient γ-Aluminiumoxid. Vor dem Aufbringen von Ceroxid oder Ceroxid und Praseodymoxid auf das Aluminiumoxid wird das Aluminiumoxid zunächst mit einer atomaren Lage von Lanthanoxid belegt, welches als Barriere zwischen dem Trägermaterial und den Sauerstoff speichernden Verbindungen dient. Die Belegung des Trägermaterials mit Lanthanoxid und Ceroxid wird durch konventionelles Imprägnieren vorgenommen, was nach den Erfahrungen der gegenwärtigen Erfinder zu chromatografischen Effekten und somit ungleichmäßiger Belegung des Trägermaterials führt.

Die nicht vorveröffentlichte EP 0 827 775 A1 beschreibt die Herstellung eines Sauerstoff speichernden Materials durch Porenvolumenimprägnierung von Ceroxid oder eines Cer/Zirkon-Mischoxides mit einer löslichen Vorläuferverbindung von Praseodymoxid.

Die ebenfalls nicht vorveröffentlichte WO 98/28063 beschreibt ein Verfahren zur Behandlung der Abgase von Verbrennungsmotoren mit Hilfe eines Katalysators, welcher eine Komponente auf der Basis eines Cer/Zirkon-Mischoxides und wenigstens eines Oxides aus der Gruppe Yttriumoxid, Lanthanoxid und Praseodymoxid enthält, und die nach Kalzinierung für die Dauer von 6 Stunden bei 900 °C mindestens noch eine spezifische Oberfläche von 35 m$^2$/g aufweist. Diese Komponente bildet eine feste Lösung der beteiligten Oxide und wird durch Thermohydrolyse einer gemeinsamen Lösung von löslichen Vorläuferverbindungen der Oxide erhalten.

Die nicht vorveröffentlichte WO 98/42437 beschreibt ebenfalls einen Katalysator, der eine innige Mischung aus Ceroxid und Praseodymoxid enthält. Diese innige Mischung kann durch Copräzipitation von Ceroxid und Praseodymoxid oder durch Imprägnieren von Ceroxid mit Vorläuferverbindungen des Praseodymoxids und nachfolgender Kalzinierung erhalten werden.

Van Dillen et al. (Proc. 6th Int. Conf. on Cat., London, ed. G.C. Bond, P.B. Wells, F.C. Tomkins, 2667 (1976)) beschreiben ein Verfahren zur Herstellung von Kupfer- und Nickelkatalysatoren auf hochoberflächigen Trägermaterialien. Bei diesem Verfahren wird das Trägermaterial zusammen mit einem Vorläufer der aktiven Komponente in Wasser dispergiert. Durch Injektion einer basischen oder sauren Lösung in die Dispersion mit Hilfe einer Kapillare (Kapillarinjektion) wird die aktive Komponente auf die Oberfläche des Trägermaterials ausgefällt. Um ein schnelles Ausfällen der aktiven Komponenten in der Lösung selbst zu vermeiden, muß das Ausfällen bei nur geringen Übersättigungen der gesamten Dispersion vorgenommen werden. Um ein homogenes Ausfällen in der ganzen Lösung gleichzeitig zu gewährleisten, muß die basische oder saure Lösung in geringen Mengen pro Zeiteinheit zugeführt und durch Rühren der Dispersion gleichmäßig in dieser verteilt werden.

Aufgabe der vorliegenden Erfindung ist es, ein Sauerstoff speicherndes Material anzugeben, welches sich durch eine hohe Temperatur- und Langzeitstabilität auszeichnet und auf einfache Weise herstellbar ist.

Diese Aufgabe wird durch ein Verfahren zur Herstellung eines Sauerstoff speichernden Materials mit hoher Temperaturstabilität gelöst, welches Ceroxid und mindestens einen Stabilisator aus der Gruppe Praseodymoxid, Lanthanoxid, Yttriumoxid und Neodymoxid enthält, wobei der oder die Stabilisatoren in röntgenamorpher Form mit Kristallitgrößen von weniger als 7 nm auf der Oberfläche eines hochoberflächigen Trägermaterials vorliegen und das Sauerstoff speichernde Material nach Kalzinierung an Luft bei 900 °C für die Dauer von 10 Stunden noch eine spezifische Oberfläche von mehr als 20 m$^2$/g aufweist. Das Verfahren ist dadurch gekennzeichnet, daß gelöste Vorstufen des oder der Stabilisatoren und gegebenenfalls Ceroxid einer zuvor bereiteten wäßrigen Dispersion des gewählten Trägermaterials unter ständigem Rühren der Dispersion zugeführt und danach durch langsames Erhöhen des pH-Wertes der Dispersion auf Werte von 8 bis 10 durch Zugabe einer Base auf dem Trägermaterial ausgefällt werden.

Mit der Bezeichnung "Sauerstoff speicherndes Material" wird im Rahmen dieser Erfindung die Kombination des Trägermaterials mit den Stabilisatoren bezeichnet. Im erfindungsgemäß hergestellten Material weist im wesentlichen Ceroxid eine Sauerstoff speichernde Funktion auf. Aber auch Praseodymoxid kann Sauerstoff speichern. Seine Speicherkapazität ist jedoch geringer als die von Ceroxid. Ceroxid wird daher im Rahmen dieser Erfindung als "Sauerstoff speichernde Verbindung" bezeichnet, während Praseodymoxid trotz seiner Sauerstoff speichernden Fähigkeit zu den Stabilisatoren gezählt wird.

Die Sauerstoff speichernde Verbindung des erfindungsgemäß hergestellten Materials kann vollständig im Trägermaterial enthalten sein. Das Trägermaterial ist dann ein Mischoxid, wobei eine Komponente des Mischoxids durch Ceroxid gebildet wird. Ist die Sauerstoffspeicherfähigkeit des Trägermaterials für die geplante Anwendung schon ausreichend, kann auf eine zusätzliche Beschichtung des Trägermaterials mit Ceroxid verzichtet werden. Bei Trägermaterialien, die kein Ceroxid enthalten, muß die notwendige Sauerstoffspeicherfähigkeit durch Beschichtung mit Ceroxid zur Verfügung gestellt werden, wobei das Ceroxid dann auf diesen Materialien gemeinsam mit den Stabilisatoren in hochdisperser Form vorliegt. Geeignete Trägermaterialien, die kein Ceroxid enthalten, sind Aluminiumoxid, Zirkonoxid, Titanoxid, Siliziumdioxid oder Mischoxide davon.

Als hochoberflächig gelten im Rahmen dieser Erfindung Materialien, deren spezifische Oberfläche, auch BET-Oberfläche (gemessen nach DIN 66132), wenigstens 10 m$^2$/g beträgt. Sogenannte aktive Aluminiumoxide erfüllen diese Bedingung. Es handelt sich dabei um feinteilige Aluminiumoxide, welche die Kristallstrukturen der sogenannten Übergangsphasen des Aluminiumoxids aufweisen. Hierzu gehören chi-, delta-, gamma-, kappa-, theta- und eta-Aluminiumoxid. Solche Materialien besitzen spezifische Oberflächen zwischen etwa 50 und 400 m$^2$/g. Ebenso sind Zirkonoxid und Cer/Zirkon-Mischoxide mit ähnlich hohen Oberflächen erhältlich. Für die Zwecke dieser Erfindung geeignete Cer/Zirkon-Mischoxide können gemäß EP 0605274 A1 durch Co-Präzipitation gewonnen werden. Sie weisen einen Gehalt an Ceroxid von 60 bis 90 Gew.-%, bezogen auf das Gesamtgewicht des Mischoxids, auf. Alternativ hierzu können auch zirkonreiche Cer/Zirkon-Mischoxide mit nur einem Gehalt an Ceroxid von 10 bis 40 Gew.-%, bezogen auf das Gesamtgewicht des Mischoxids eingesetzt werden.

Auf diesen Trägermaterialien werden der oder die Stabilisatoren und gegebenenfalls Ceroxid in hochdisperser Form durch geeignete Imprägniertechniken aufgebracht.

Es hat sich gezeigt, daß die genannten Trägermaterialien, wenn sie wenigsten einen Stabilisator in hochdisperser Form auf ihrer spezifischen Oberfläche vorliegen haben, eine außergewöhnliche Temperatur- und Langzeitstabilität aufweisen. Als temperatur- und langzeitstabil werden im Rahmen dieser Erfindung Materialien bezeichnet, die nach Kalzinierung an Luft bei einer Temperatur von 900°C für die Dauer von 10 Stunden noch eine spezifische Oberfläche von mindestens 20, bevorzugt mindestens 30 m$^2$/g, besitzen. Für diese Stabilisierung ist es ausreichend, 0,1 bis 10 Gew.-% Stabilisatoren, bezogen auf das Gesamtgewicht des Sauerstoff speichernden Materials, aufzubringen. Unter einem Gehalt von 0,1 Gew.-% ist die Stabilisierung nicht mehr ausreichend. Oberhalb von 10 Gew.-% wird keine wesentliche Steigerung der Temperaturstabilität mehr beobachtet.

Im erfindungsgemäß hergestellten Sauerstoff speichernden Material liegen die Stabilisatoren auf dem Trägermaterial mit Kristallitgrößen von weniger als 7 nm vor. Diese Tatsache verleiht dem Material eine besonders hohe Temperaturstabilität. Stabilisatoren mit solch geringen Kristallitgrößen werden als röntgenamorph bezeichnet, da sie kein diskretes Röntgenbeugungsspektrum mehr aufweisen.

In einer besonderen Ausführungsform der Erfindung wird ein Cer/Zirkon-Mischoxid als hochoberflächiges Trägermaterial mit einem Gehalt von 60 bis 90 Gew.-% Ceroxid, bezogen auf das Gesamtgewicht des Mischoxids, verwendet. Zur Stabilisierung dieses Materials ist es ausreichend, nur den oder die Stabilisatoren auf der Oberfläche in hochdisperser Form aufzubringen.

In einer weiteren Ausführungsform der Erfindung dienen Zirkonoxid oder Aluminiumoxid als hochoberflächige Trägermaterialien. Um dem Trägermaterial eine ausreichende Sauerstoffspeicherfähigkeit bei gleichzeitig hervorragender Temperatur- und Langzeitstabilität zu verleihen, werden Ceroxid und ein oder mehrere Stabilisatoren in hochdisperser Form auf dem Zirkonoxid oder Aluminiumoxid aufgebracht, wobei der Gehalt des fertigen Materials an Ceroxid 5 bis 60 Gew.-%, bezogen auf das Gesamtgewicht des Sauerstoff speichernden Materials, beträgt.

Bevorzugt wird zur Stabilisierung des Sauerstoff speichernden Materials Praseodymoxid verwendet.

Stabilisatoren und gegebenenfalls Ceroxid werden erfindungsgemäß auf dem gewählten Trägermaterial mittels des homogenen Ausfällungsverfahrens abgeschieden. Dieses Abscheideverfahren gewährleistet die Abscheidung der Stabilisatoren und des Cers in hochdisperser Form. Bei diesem Verfahren werden die Stabilisatoren und gegebenenfalls Cer in Form löslicher Vorläuferverbindungen verwendet. Geeignet sind zum Beispiel Nitrate, Acetate, Chloride und andere lösliche Verbindungen.

Das homogene Ausfällungsverfahren wurde von Dillen et al. für die Abscheidung von Nickel und Kupfer beschrieben. Zur Durchführung dieses Verfahrens kann das feinteilige Trägermaterial zusammen mit den Vorläuferverbindungen von Cer und den Stabilisatoren in Wasser dispergiert bzw. gelöst werden. Bevorzugt wird jedoch eine separate Lösung der Vorläuferverbindungen zubereitet, die langsam in die Dispersion des Trägermaterials eingerührt wird. Hierfür kann zum Beispiel die sogenannte Kapillarinjektion eingesetzt werden. Die Lösung der Vorläuferverbindungen wird dabei mit Hilfe einer oder mehrerer Kapillaren unter der Oberfläche der wäßrigen Trägerdispersion in die Dispersion injiziert und mit Hilfe eines Rührers schnell über das gesamte Dispersionsvolumen verteilt.

Bei der Zubereitung der Mischung aus Dispersion und Lösung der Vorläuferverbindungen kann es schon zu einer gewissen Adsorption der Vorläuferverbindungen auf der Oberfläche des Trägermaterials und damit zur Bildung von Kristallisationskeimen kommen. Das Ausmaß dieser Adsorption hängt von der Materialkombination Trägermaterial/Stabilisatoren ab. Die eigentliche Abscheidung der Stabilisatoren und gegebenenfalls des Cers wird jedoch durch chemische Ausfällung vorgenommen. Hierzu wird eine verdünnte, wäßrige Base, bevorzugt eine verdünnte Ammoniaklösung (1 bis 5 Gew.-% NH$_3$ in Wasser), ebenfalls durch Kapillarinjektion der Dispersion zugeführt. Die Injektionsrate wird so gewählt, daß eine möglichst schnelle und homogene Verteilung der Ammoniaklösung über das Volumen der Dispersion gewährleistet ist. Bewährt haben sich Injektionsraten R von 1 bis 4·10$^{-5}$ ml Ammoniaklösung pro Minute und ml Wasser sowie g Trägermaterial:

$$R = 1 \ldots 4 \times 10^{-5} \ \frac{[\text{ml NH}_3 \ \text{Lösung}]}{[\text{min} \times \text{ml H}_2\text{O} \times \text{g Trägermaterial}]}$$

Die obige Formel gibt einen Richtwert für die geeignete Injektionsrate. Wichtig bei der Festlegung der Injektionsrate ist, daß die Ausfällung der Stabilisatoren nicht in der wäßrigen Phase der Dispersion erfolgt, sondern an den auf der Trägeroberfläche gebildeten Kondensationskeimen. Durch entsprechende Versuche kann die geeignete Injektionsrate leicht bestimmt werden.

Durch die Injektion der Base bzw. Ammoniaklösung wird der zunächst im sauren Bereich liegende pH-Wert der Mischung aus Dispersion und gelösten Vorläuferverbindungen (pH-Wert zwischen 1 bis 7, abhängig von der Azidität des Trägermaterials) langsam auf einen Wert von 8 bis 10 angehoben. Dabei werden die Vorläuferverbindungen in Form ihrer Hydroxide ausgefällt und auf der Oberfläche des Trägermaterials abgeschieden.

Das homogene Ausfällungsverfahren liefert eine chemische Fixierung der Vorläuferverbindungen auf dem Trägermaterial. Eine nachgeschaltete thermische Fixierung durch Kalzination wie im Falle der Porenvolumenimprägnierung ist nicht notwendig. Zur Zubereitung einer Beschichtungsdispersion für die inerten Katalysatortragkörper kann die Dispersion nach Beendigung der Ausfällung entwässert, getrocknet und gegebenenfalls kalziniert werden, bevor das so gewonnene Sauerstoff speichernde Material mit anderen Beschichtungskomponenten zusammen erneut dispergiert und zum Beispiel durch Tauchen auf die Tragkörper aufgezogen wird. Wegen der chemischen Fixierung der Vorläuferverbindungen auf dem Trägermaterial besteht jedoch auch die Möglichkeit, die Dispersion nach Beendigung der chemischen Ausfällung direkt zu einer Beschichtungsdispersion durch Zugabe weiterer Beschichtungskomponenten weiterzuverarbeiten.

Im folgenden wird die Erfindung an Hand einiger Beispiele näher erläutert. Es zeigen:

Figur 1: Skizze der Apparatur zur Durchführung der homogenen Ausfällung

Figur 2: Röntgenbeugungsdiagramme der Pulver H und I im Frischzustand nach Kalzination bei 600°C für die Dauer von 2 Stunden.

Figur 3: Röntgenbeugungsdiagramme der Pulver H und I nach Alterung (Kalzination bei 900°C für die Dauer von 10 Stunden).

Figur 4: Zeitliche Abhängigkeit der Umsatzraten für Kohlenmonoxid und der Stickoxide bei Variation der Luftzahl $\lambda$ zur Bestimmung des Crossover-Punktes

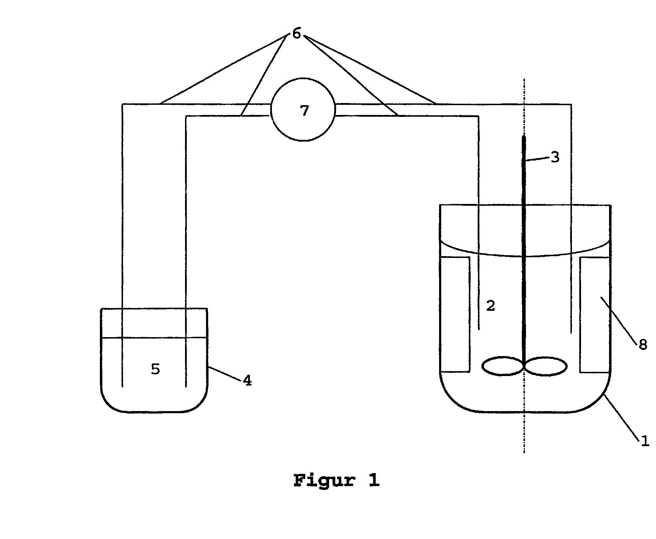

Figur 1 zeigt die Ausführung einer Apparatur zur Durchführung des erfindungsgemäß zu verwendenden homogenen Ausfällungsverfahrens. Im Gefäß 1 mit einem Volumen von 2 l wird eine wäßrige Dispersion 2 des Trägermaterials angesetzt. Aus dem Vorlagegefäß 4 wird eine vorbereitete gemeinsame Lösung der Vorläuferverbindungen 5 der Stabilisatoren und gegebenenfalls des Cers mit einem oder mehreren Kapillarschläuchen 6 (Innendurchmesser etwa 1 mm) unter der Oberfläche in die Dispersion 2 injiziert. Die Dispersion wird dabei mit Hilfe des Rührers 3 (1200 Umdrehungen pro Minute) ständig gut gerührt. Strömungsbrecher 8 intensivieren die Durchmischung der Dispersion. 7 bezeichnet eine Schlauchpumpe. Nach Injektion der Lösung wird aus einem weiteren, hier nicht gezeigten Vorlagegefäß, eine verdünnte Ammoniaklösung in ganz analoger Weise in die nun vorliegende Mischung aus Dispersion und Lösung der Vorläuferverbindungen injiziert und die Vorläuferverbindungen durch Anheben des pH-Wertes der Mischung auf Werte oberhalb von 8 bis 10 auf das Trägermaterial ausgefällt.

Die hier gezeigte Apparatur eignet sich für kleine Materialansätze und wurde in dieser Form auch für die folgenden Beispiele benutzt. Das homogene Ausfällungsverfahren kann jedoch auch kontinuierlich durchgeführt werden, indem die Dispersion des Trägermaterials in einem kontinuierlichen Strom durch ein Rühr- oder Mahlaggregat geführt wird. Zur homogenen Einmischung der Vorläuferverbindungen und der Ammoniaklösung können zwei solcher Aggregate hintereinander geschaltet werden. Die Lösung der Vorläuferverbindungen und die Ammoniaklösung werden zweckmäßigerweise direkt in die Rühr- beziehungsweise Mahlaggregate eingebracht.

Für die folgenden Beispiele wurden ein Cer/Zirkon-Mischoxid sowie ein reines Zirkonoxid als Trägermaterialien für Praseodymoxid und Ceroxid verwendet. Die Eigenschaften dieser Trägermaterialien sind in Tabelle 1 aufgeführt.

Mit den in den Beispielen hergestellten pulverförmigen, Sauerstoff speichernden Materialien wurden unter Zugabe von Aluminiumoxid und Aktivierung mit Palladium Modellkatalysatoren hergestellt, die bezüglich ihres Anspringverhaltens und ihrer prozentualen Konvertierungsrate am Schnittpunkt der CO- und $NO_x$-Umsatzkurve (Crossover-Punkt) untersucht wurden. Neben den mit Praseodymoxid beziehungsweise Ceroxid modifizierten Pulvern wurden auch die reinen Pulver selbst zur Herstellung von Katalysatoren verwendet. In den folgenden Beispielen wurden die verschiedenen Pulver mit durchlaufenden Buchstaben von A bis I gekennzeichnet. A bezeichnet das reine Cer/ Zirkon-Mischoxid und E das reine Zirkonoxid.

Tabelle 1:

| Pulver-bezeichnung | Zusammensetzung | BET-Oberfläche [m$^2$/g] | Korngröße d$_{50}$[µm] |
|---|---|---|---|
| A | CeO$_2$/ZrO$_2$ 70/30 | 60 | 30 |
| E | ZrO$_2$ | 100 | 10 |
| d$_{50}$: Korndurchmesser, welcher größer oder gleich dem Durchmesser von 50 Gew.-% des Materials ist. | | | |

**Vergleichsbeispiel 1:**

Pulver A wurde durch Porenvolumenimprägnierung mit einer wäßrigen Lösung von Praseodymnitrat (Pr(NO$_3$)$_3$·5H$_2$O) imprägniert. Bei der Porenvolumenimprägnierung wird die zu imprägnierenden Komponente in einem Volumen des Lösungsmittels gelöst, welches 90 bis 100% der Aufnahmekapazität des Pulvers für das betreffende Lösungsmittel entspricht.

Nach Trocknen des imprägnierten Pulvers bei 120°C wurde es zur Überführung des Praseodymnitrats in das entsprechende Oxid 2 Stunden bei 600°C an Luft kalziniert. Um eine gleichmäßige Durchwärmung des vorgelegten Pulvers zu gewährleisten, wurde die Temperatur innerhalb von 4 Stunden auf die gewünschten 600°C erwärmt. Das fertige Pulver enthielt 5 Gew.-% Praseodymoxid (Pr$_6$O$_{11}$), bezogen auf das Gesamtgewicht des Pulvers. Dieses Material wird im folgenden als Pulver B bezeichnet.

**Vergleichsbeispiel 2:**

Zum Vergleich von Pulver B mit einem Material gleicher Zusammensetzung, welches durch Co-Präzipitation hergestellt wurde, wurde eine wäßrige Lösung von Cernitrat, Zirkonylnitrat und Praseodymnitrat angefertigt. Die Lösung besaß einen pH-Wert von 2. Durch langsame Zugabe einer verdünnten Ammoniaklösung wurden Cer, Zirkon und Praseodym gleichzeitig in Form ihrer Hydroxide ausgefällt. Der Niederschlag wurde abfiltriert, gewaschen, bei 120°C getrocknet und anschließend zur Überführung der Hydroxide in die entsprechenden Oxide für die Dauer von 2 Stunden bei 600°C an Luft kalziniert. Die Aufheizrate auf die Endtemperatur von 600°C wurde wie in Vergleichsbeispiel 1 gewählt. Das fertige Material (Pulver C) enthielt wie Pulver B 66,5 Gew.-% Ceroxid, 28,5 Gew.-% Zirkonoxid und 5 Gew.-% Praseodymoxid.

**Beispiel 1:**

Pulver A wurde in Wasser dispergiert und durch das homogene Ausfällungsverfahren mit Praseodym unter Verwendung von Praseodymacetat und 5 Gew.-% iger Ammoniaklösung belegt. Wie in den vorhergehenden Beispielen wurde das belegte Pulver abfiltriert, bei 120°C getrocknet und anschließend bei 600°C für die Dauer von 2 Stunden an Luft kalziniert. Dieses Pulver wird im folgenden als Pulver D bezeichnet. Es hatte dieselbe Zusammensetzung wie die Pulver B und C.

**Vergleichsbeispiel 3:**

Pulver E wurde mittels der Porenvolumenimprägnierung unter Verwendung von Cernitrat mit insgesamt 20 Gew.-% Ceroxid, bezogen auf das Gesamtgewicht des fertigen Materials, belegt. Trocknung und Kalzination wurden wie in den vorhergehenden Beispielen vorgenommen. Das so gewonnene. Material wird im folgenden als Pulver F bezeichnet.

**Beispiel 2:**

Pulver E wurde mittels der homogenen Ausfällung unter Verwendung von Cernitrat mit insgesamt 20 Gew.-% Ceroxid, bezogen auf das Gesamtgewicht des fertigen Materials, belegt. Trocknung und Kalzination wurden wie in den vorhergehenden Beispielen vorgenommen. Das so gewonnene Material wird im folgenden als Pulver G bezeichnet.

**Vergleichsbeispiel 4:**

Pulver E wurde unter Verwendung von Praseodymnitrat und Cernitrat ($Ce(NO_3)_3 \cdot 6H_2O$) im Molverhältnis Ce/Pr = 10/1 mittels der Porenvolumenimprägnierung belegt. Das Material wurde wie in den vorangehenden Beispielen getrocknet und kalziniert. Das fertige Pulver enthielt 79 Gew.-% Zirkonoxid, 19 Gew.-% Ceroxid und 2 Gew.-% Praseodymoxid, jeweils bezogen auf das Gesamtgewicht des fertigen Pulvers, welches im folgenden als Pulver H bezeichnet wird.

**Beispiel 3:**

Analog zu Vergleichsbeispiel 4 wurde Pulver E mit denselben Mengen Ceroxid und Praseodymoxid belegt. Im Unterschied zu Vergleichsbeispiel 4 wurde die Belegung mittels des homogenen Ausfällungsverfahrens vorgenommen. Das Pulver wird im folgenden als Pulver I bezeichnet.

Tabelle 2 gibt einen Überblick über die für die folgenden Untersuchungen verwendeten Pulver:

Tabelle 2:

| Pulvermaterialien | | |
|---|---|---|
| Pulver | Zusammensetzung | Herstellverfahren |
| A | $CeO_2/ZrO_2$ 70/30 | Trägermaterial, reines Mischoxid |
| B | $CeO_2/ZrO_2/Pr_6O_{11}$ 66,5/28,5/5 | Pulver A + Porenvolumenimprägnierung mit Praseodymnitrat |
| C | $CeO_2/ZrO_2/Pr_6O_{11}$ 66,5/28,5/5 | Co-Präzipitation von Cernitrat, Zirkonylnitrat und Praseodymnitrat |
| D | $CeO_2/ZrO_2/Pr_6O_{11}$ 66,5/28,5/5 | Pulver A + homogene Ausfällung von Praseodymacetat |
| E | $ZrO_2$ | Trägermaterial, reines Zirkonoxid |
| F | $ZrO_2/CeO_2$ | Pulver E + Porenvolumenimprägnierung mit Cernitrat |
| G | $ZrO_2/CeO_2$ | Pulver E + homogene Ausfällung von Cernitrat |
| H | $ZrO_2/CeO_2/Pr_6O_{11}$ 79/19/2 | Pulver E + Porenvolumenimprägnierung mit Cernitrat und Praseodymnitrat |
| I | $ZrO_2/CeO_2/Pr_6O_{11}$ 79/19/2 | Pulver E + homogene Ausfällung von Cernitrat und Praseodymnitrat |

**Alterung der Pulvermaterialien:**

Die Pulvermaterialien der Tabelle 2 wurden zur Alterung einer Kalzination an Luft bei 900°C für die Dauer von 10 Stunden unterworfen. Die Aufheizrate auf die Endtemperatur von 900°C betrug 225°C/h.

Anschließend wurden von allen Materialien die spezifischen Oberflächen nach DIN 66132 ermittelt. Die Ergebnisse dieser Messungen sind in Tabelle 3 aufgeführt.

Tabelle 3:

| Pulver | BET-Oberfläche [$m^2/g$] | Verfahren |
|---|---|---|
| A | 34 | reines Mischoxid |
| B | 42 | Porenvolumenimprägnierung |
| C | 21 | Co-Präzipitation |
| D | 46 | homogene Ausfällung |
| E | 14 | reines Zirkonoxid |
| F | 29 | Porenvolumenimprägnierung |
| G | 34 | homogene Ausfällung |
| H | 39 | Porenvolumenimprägnierung |
| I | 47 | homogene Ausfällung |

Von den Pulvermaterialien F bis I wurden die röntgenografischen Kristallitgrößen von Zirkonoxid in den Pulverkörner im frischen Zustand, das heißt nach der ersten Kalzination bei 600°C, und nach Alterung, das heißt nach zehnstündiger Kalzination bei 900°C, bestimmt. Die Meßergebnisse sind in Tabelle 4 wiedergegeben:

Tabelle 4:

| Pulver | ZrO$_2$-Kristallitgräßen im Frischzustand [nm] | ZrO$_2$-Kristallitgrößen nach Alterung [nm] |
|---|---|---|
| F | 35,1 | 40,2 |
| G | 19,4 | 40,8 |
| H | 23,8 | 29,3 |
| I | 23,1 | 25,1 |

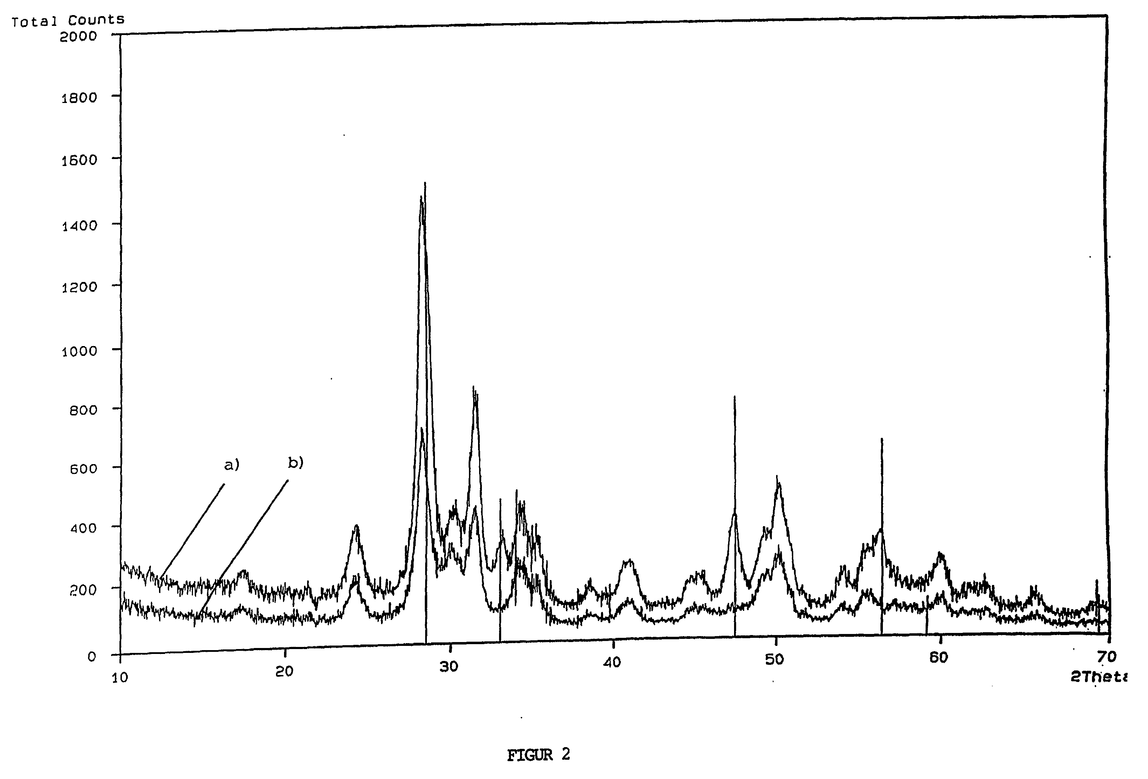

Figur 2 zeigt die Röntgenbeugungsdiagramme der Pulver H (Kurve a)) und I (Kurve b)) im Frischzustand nach der abschließenden Kalzination bei 600°C für die Dauer von 2 Stunden. Beide Pulver enthalten gleiche Mengen Ceroxid und Praseodymoxid auf dem Träger Zirkonoxid.

Beide Beugungsdiagramme zeigen deutlich die Struktur des Trägers. Es handelt sich um eine Mischung aus monoklinen und tetragonalen Phasen des Zirkonoxids, erkennbar an den 3 Beugungsreflexen bei einem Beugungswinkel 2Θ = 30°.

Der Kurve a) sind zusätzliche Beugungsreflexe überlagert, die sich eindeutig dem Ceroxid zuordnen lassen. Die senkrechten Linien in Figur 2 geben die Lage der Beugungsreflexe von reinem Ceroxid wieder. Das Beugungsdiagramm von Pulver I (Kurve b)) zeigt dagegen nicht die überlagerten Reflexe des Ceroxids trotz gleichem Gehalt an Ceroxid.

Aus diesen Tatsachen läßt sich schließen, daß das Ceroxid im Pulver H, welches durch Porenvolumenimprägnierung hergestellt wurde, in Form relativ großer Kristallite auf dem Zirkonoxidträger vorliegt. Dagegen erfolgte die Abscheidung des Ceroxids auf dem Zirkonoxid durch homogene Ausfällung in röntgenamorpher Form. Eine Mischoxidbildung zwischen Ceroxid und Zirkonoxid kann bei der gewählten Temperatur für die Kalzination von 600°C ausgeschlossen werden. Eine Mischoxidbildung müßte sich außerdem durch eine Verschiebung der Beugungsreflexe des Zirkonoxids bemerkbar machen. Das ist jedoch nicht der Fall.

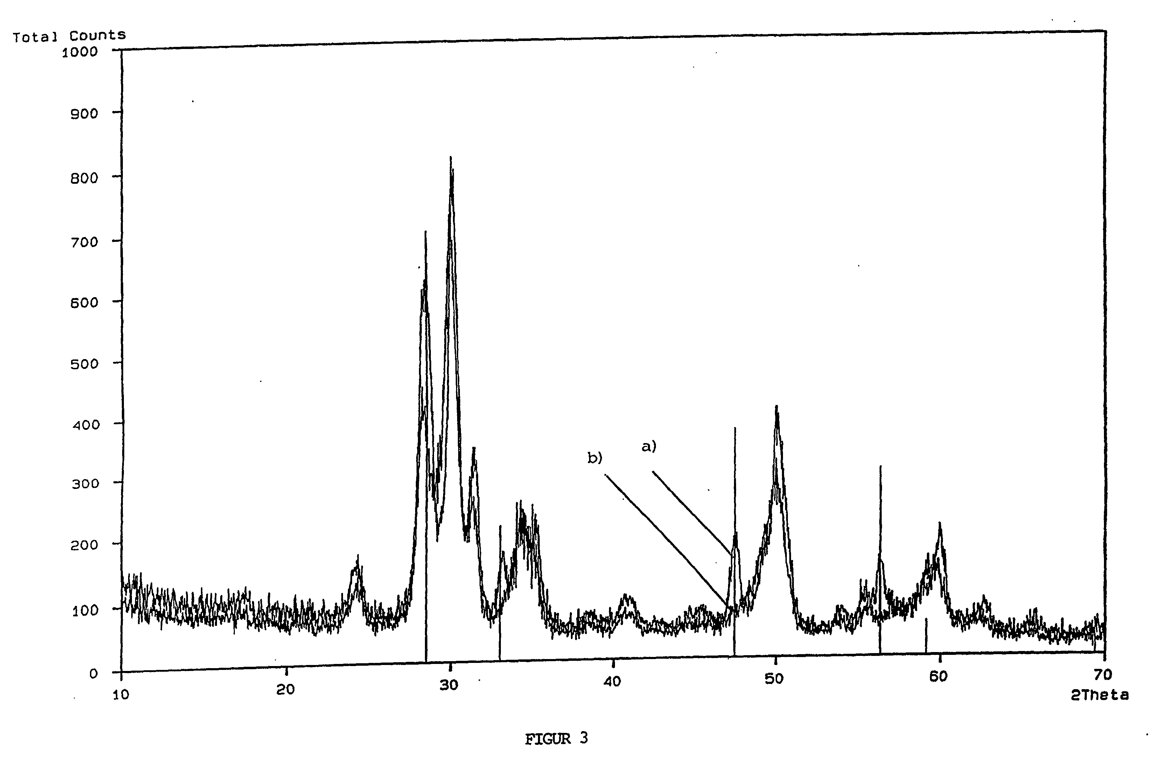

Figur 3 zeigt die Beugungsdiagramme der Pulver H und I nach Alterung bei einer Temperatur von 900°C für die Dauer von 10 Stunden. Kurve a) von Pulver H zeigt weiterhin die zusätzlichen Beugungsreflexe von Ceroxid. Die Breite dieser Beugungsreflexe hat sich durch die Alterung verringert, was auf ein Wachstum der Ceroxid-Kristallite schließen läßt.

Kurve b) von Pulver I zeigt aber weiterhin nur die Beugungsreflexe von Zirkonoxid, das heißt der Ceroxidgehalt dieses Pulvers liegt weiterhin in röntgenamorpher Form auf dem Zirkonoxid vor. Weder hat ein Partikelwachstum stattgefunden noch läßt sich eine Mischoxidbildung beobachten.

Das homogene Ausfällungsverfahren gemäß der vorliegenden Erfindung führt also zur Abscheidung des Ceroxids und der Stabilisatoren auf dem jeweiligen Trägermaterial in hochdisperser, röntgenamorpher Form. Die Dispersion der abgeschiedenen Stoffe ist bis zu Temperaturen von 900°C stabil. Diese positiven Eigenschaften der erfindungsgemäßen Sauerstoff speichernden Materialien machen sich auch bei der Stabilität der spezifischen Oberfläche (siehe Tabelle 3) und auch bei Anwendung in Abgasreinigungskatalysatoren bemerkbar.

**Anwendungsbeispiel:**

Unter Verwendung der Pulver A bis D wurden Katalysatoren angefertigt und deren Anspringtemperaturen T$_{50}$ für die Umsetzung der Schadstoffe Kohlenmonoxid CO, Kohlenwasserstoffe HC und Stickoxide NO$_x$ ermittelt. Unter der Anspringtemperatur wird diejenige Abgastemperatur verstanden, bei der der jeweils betrachtete Schadstoff vom Katalysator zu 50% umgesetzt wird.

Zur Anfertigung der Katalysatoren wurden die genannten Pulvermaterialien jeweils zusammen mit einem hochoberflächigen, aktiven Aluminiumoxid (spezifische Oberfläche 140 m$^2$/g) im Gewichtsverhältnis 1:5 in Wasser dispergiert. Mit dieser Beschichtungsdispersion wurden Wabenkörper aus Cordierit mit einer Zelldichte (Anzahl der Strömungskanäle pro Quadratzentimeter Querschnittsfläche) von 62 cm$^{-2}$ und Wandstärken der Strömungskanäle von 0,2 mm durch Tauchen beschichtet. Die Beschichtung wurde anschließend getrocknet und bei 500°C für die Dauer von 3 Stunden kalziniert. Danach wurde die Beschichtung durch Tauchen der Wabenkörper in eine Lösung von Palladiumnitrat imprägniert, erneut bei 300°C getrocknet und kalziniert. Die fertigen Katalysatoren enthielten 100 g Aluminiumoxid, 20 g des jeweiligen Pulvermaterials sowie 2,1 g Palladium, jeweils bezogen auf ein Liter des Wabenkörpervolumens.

Die hergestellten Katalysatoren werden mit den Buchstaben A bis D entsprechend dem für ihre Herstellung verwendeten Sauerstoff speichernden Materials bezeichnet. Vor der Messung der Anspringtemperaturen für die drei Schadstoffe CO, HC und NO$_x$ und des sogenannten Crossover-Punktes CO/NO$_x$ wurden die Katalysatoren einer hydrothermalen Alterung für die Dauer von 16 Stunden bei einer Temperatur von 960°C unterworfen. Zur hydrothermalen Alterung wurden die Katalysatoren in einem Gasstrom aus 10 Vol-% Wasserdampf, Rest Stickstoff, bei der genannten Temperatur gelagert.

Tabelle 5 zeigt die an den gealterten Katalysatoren gemessenen Anspringtemperaturen für die drei verschiedenen Schadstoffe sowie die Crossover-Punkte CO/NO$_x$ für die Umsetzung von Kohlenmonoxid und Stickoxiden im dynamischen Betrieb.

Tabelle 5

| Katalysator | CO T$_{50}$ [°C] | HC T$_{50}$ [°C] | NO$_x$ T$_{50}$ [°C] | CO/NO$_x$ [%] |
|---|---|---|---|---|
| A | 336 | 336 | 317 | 51,7 |
| B | 310 | 310 | 287 | 58,8 |
| C | 317 | 317 | 325 | 65,4 |
| D | 288 | 284 | 293 | 79,1 |

Vorteilhaft für Anwendung des Sauerstoff speichernden Materials in Katalysatoren für die Abgasreinigung von Verbrennungskraftmaschinen sind möglichst niedrige Anspringtemperaturen der damit hergestellten Katalysatoren und möglichst hohe Crossover-Punkte. Insgesamt liefert der Katalysator D eine günstigere Eigenschaftskombination als die Vergleichskatalysatoren A, B und C.

Zur Bestimmung der Crossover-Punkte von Tabelle 5 wurden die Katalysatoren in einer Synthesegasanlage mit einem synthetischen Abgas der in Tabelle 6 angegebenen Zusammensetzung bei einer Temperatur von 400°C und einer Raumgeschwindigkeit von 50000 h$^{-1}$ überprüft.

Tabelle 6

| Zusammensetzung des Abgases | |
|---|---|
| Abgaskomponente | Konzentration [Vol.-%] |
| CO$_2$ | 14,00 |
| CO | 0,0975 |
| H$_2$ | 0,0325 |
| NO | 0,100 |
| Propen | 0,033 |
| Propan | 0,016 |
| H$_2$O | 10,0 |
| O$_2$ | -- |
| SO$_2$ | 0,001 |
| N$_2$ | Rest |

Für die Bestimmung der Crossover-Punkte wurde die Luftzahl $\lambda$ des Abgases durch Zudosieren von Sauerstoff innerhalb von 10 Minuten linear von einer Luftzahl 0,99 auf eine Luftzahl von 1,03 erhöht und danach mit gleicher Rate wieder abgesenkt. Dieser langsamen Änderung der Luftzahl wurde eine periodische Änderung der Luftzahl mit einer Frequenz von 0,5 Hz und einer Amplitude von $\Delta\lambda=\pm 0,059$ aufmoduliert (dynamischer Betrieb).

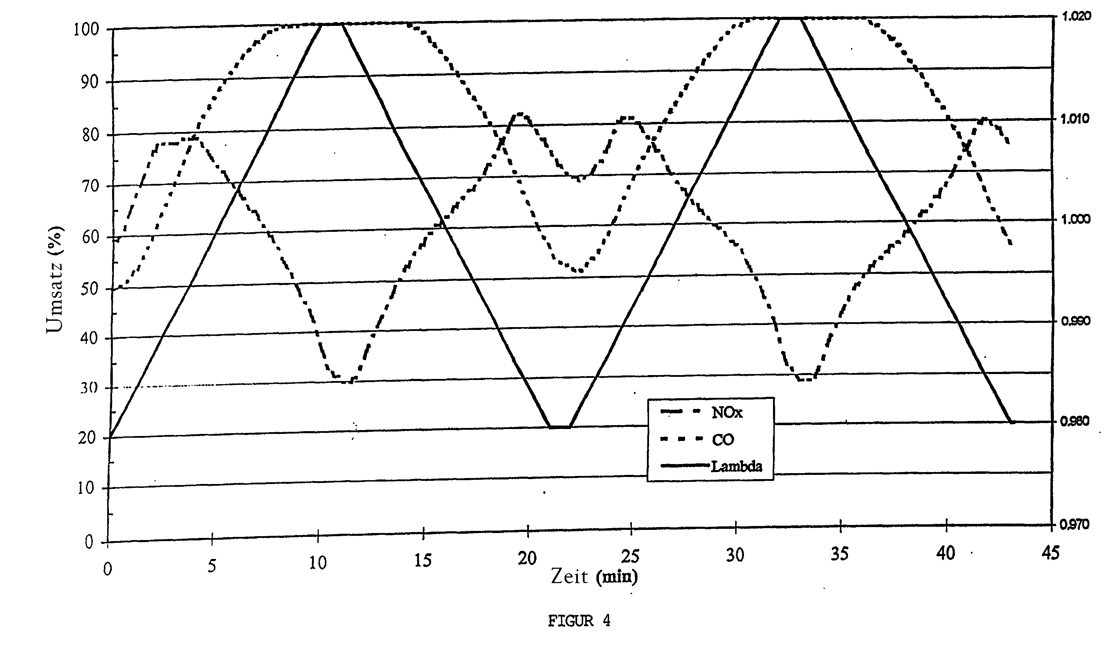

Während dieser Beanspruchung der Katalysatoren wurden ihre Umsatzraten für Kohlenmonoxid CO und Stickoxide NO$_x$ gemessen und in einem Diagramm nach Figur 4 über der Zeit aufgetragen. Das Diagramm in Figur 4 gibt die Meßkurven für den Katalysator D wieder. Aus diesem Diagramm kann der Wert des prozentualen Umsatz bei Gleichheit der Umsätze für Kohlenmonoxid und Stickoxide abgelesen werden (Crossover-Punkt).

**Patentansprüche**

1. Verfahren zur Herstellung eines Sauerstoff speichernden Materials mit hoher Temperaturstabilität, welches Ceroxid und mindestens einen Stabilisator aus der Gruppe Praseodymoxid, Lanthanoxid, Yttriumoxid und Neodymoxid enthält, wobei der oder die Stabilisatoren in röntgenamorpher Form mit Kristallitgrößen von weniger als 7 nm auf der Oberfläche eines hochoberflächigen Trägermaterials vorliegen und das Sauerstoff speichernde Material nach Kalzinierung an Luft bei 900 °C für die Dauer von 10 Stunden noch eine spezifische Oberfläche von mehr als 20 m$^2$/g, aufweist,
**dadurch gekennzeichnet,**

**daß** gelöste Vorstufen des oder der Stabilisatoren und gegebenenfalls Ceroxid einer zuvor bereiteten wäßrigen Dispersion des gewählten Trägermaterials unter ständigem Rühren der Dispersion zugeführt und danach durch langsames Erhöhen des pH-Wertes der Dispersion auf Werte von 8 bis 10 durch Zugabe einer Base auf dem Trägermaterial ausgefällt werden.

2. Verfahren nach Anspruch 1,
   **dadurch gekennzeichnet,**
   **daß** als Trägermaterial ein Ceroxid oder ein Cer/Zirkon-Mischoxid verwendet wird.

3. Verfahren nach Anspruch 2,
   **dadurch gekennzeichnet,**
   **daß** als Trägermaterial ein Cer/Zirkon-Mischoxid mit einem Gehalt an Ceroxid von 60 bis 90 Gew.-%, bezogen auf das Gesamtgewicht des Mischoxids, verwendet wird.

4. Verfahren nach Anspruch 1,
   **dadurch gekennzeichnet,**
   **daß** als Trägermaterial ein Aluminiumoxid, Zirkonoxid, Titanoxid, Siliziumdioxid oder ein Mischoxid davon eingesetzt wird.

5. Verfahren nach Anspruch 4,
   **dadurch gekennzeichnet,**
   **daß** als Trägermaterial Zirkonoxid oder Aluminiumoxid verwendet wird und der Gehalt des fertigen Sauerstoff speichernden Materials an Ceroxid 5 bis 60 Gew.-%, bezogen auf das Gesamtgewicht des Sauerstoff speichernden Materials, eingestellt wird.

6. Verfahren nach einem der vorstehenden Ansprüche,
   **dadurch gekennzeichnet,**
   **daß** der Gehalt an Stabilisatoren auf 0,1 bis 10 Gew.-%, bezogen auf das Gesamtgewicht des fertigen Sauerstoff speichernden Materials, eingestellt wird.

7. Verwendung des Sauerstoff speichernden Materials, welches nach einem der vorstehenden Verfahren erhältlich ist, für die Abgasreinigung von Brennkraftmaschinen.

**Claims**

1. Method for preparing an oxygen storing material with high thermal stability which contains cerium oxide and at least one stabiliser from the group praseodymium oxide, lanthanum oxide, yttrium oxide and neodymium oxide, wherein the stabiliser(s) are present in X-ray amorphous form with crystallite sizes of less than 7 nm on the surface of a high surface area support material and the oxygen storing material, after calcination in air at 900°C for a period of 10 hours, still has a specific surface area of more than 20 m$^2$/g, **characterized in that**, dissolved precursors of the stabiliser(s) and optionally cerium oxide are added to a previously prepared aqueous dispersion of the chosen support material with constant stirring and then are precipitated onto the support material by slowly increasing the pH-value of the dispersion to values of 8 to 10 by adding a base.

2. The method according to claim 1, **characterized in that**, a cerium oxide or a cerium/zirconium mixed oxide is used as support material.

3. The method according to claim 2, **characterized in that**, a cerium/zirconium mixed oxide with a concentration of cerium oxide of 60 to 90 wt.%, with respect to the total weight of the mixed oxide, is used as support material.

4. The method according to claim 1, **characterized in that**, an aluminium oxide, zirconium oxide, titanium oxide, silicon dioxide or a mixed oxide thereof is used as support material.

5. The method according to claim 4, **characterized in that**, zirconium oxide or aluminium oxide is used as support material and that the final oxygen storing material has a concentration of 5 to 60 wt.% of cerium oxide, with respect to the total weight of the oxygen storing material.

6. The method according to any one of the preceding claims, **characterized in that**, the concentration of stabilizers is 0.1 to 10 wt.%, with respect to the total weight of the final oxygen storing material.

7. Usage of the oxygen storing material, obtained according to any one of the preceding methods, in the exhaust gas treatment of combustion engines.

**Revendications**

1. Procédé pour la fabrication d'un matériau accumulant l'oxygène présentant une stabilité élevée à la température, qui contient de l'oxyde de cérium et au moins un stabilisant du groupe constitué par l'oxyde de praséodyme, l'oxyde de lanthane, l'oxyde d'yttrium et l'oxyde de néodyme, le ou les stabilisants se trouvant sous une forme amorphe aux rayons X avec des tailles de cristallite inférieures à 7 nm à la surface d'un matériau support à surface élevée et le matériau accumulant l'oxygène présentant encore une surface spécifique supérieure à 20 $m^2$/g après calcination à l'air à 900°C pendant une durée de 10 heures, **caractérisé en ce que** des précurseurs dissous du ou des stabilisants et le cas échéant l'oxyde de cérium sont ajoutés à une dispersion aqueuse préparée au préalable du matériau support choisi sous agitation constante de la dispersion puis sont précipités sur le matériau support par augmentation lente du pH de la dispersion à des valeurs de 8 à 10 par addition d'une base.

2. Procédé selon la revendication 1, **caractérisé en ce qu'**on utilise comme matériau support un oxyde de cérium ou un oxyde mixte de cérium et de zirconium.

3. Procédé selon la revendication 2, **caractérisé en ce qu'**on utilise comme matériau support un oxyde mixte de cérium et de zirconium présentant une teneur en oxyde de cérium de 60 à 90% en poids, par rapport au poids total de l'oxyde mixte.

4. Procédé selon la revendication 1, **caractérisé en ce qu'**on utilise comme matériau support un oxyde d'aluminium, un oxyde de zirconium, un oxyde de titane, un dioxyde de silicium ou un oxyde mixte de ceux-ci.

5. Procédé selon la revendication 4, **caractérisé en ce qu'**on utilise comme matériau support de l'oxyde de zirconium ou de l'oxyde d'aluminium et la teneur en oxyde de cérium dans le matériau fini accumulant l'oxygène est réglée à 5 jusqu'à 60 % en poids par rapport au poids total du matériau accumulant l'oxygène.

6. Procédé selon l'une quelconque des revendications précédentes, **caractérisé en ce que** la teneur en stabilisants est réglée à 0,1 jusqu'à 10 % en poids par rapport au poids total du matériau fini accumulant l'oxygène.

7. Utilisation du matériau accumulant l'oxygène qui peut être obtenu selon l'un quelconque des procédés susmentionnés pour la purification des effluents gazeux de machines à combustion interne.

Figur 1

FIGUR 2

FIGUR 3

FIGUR 4